# EUROPEAN PATENT APPLICATION

(11) **EP 1 939 510 A1**
(43) Date of publication of application: **02.07.2008**
(21) Application number: 06811277.0
(22) Date of filing: 05.10.2006
(51) Int. Cl.: F16L 11/12, F16L 33/00, F16L 33/28, F16L 55/00

(54) **MARINE HOSE**

(30) Priority: 17.10.2005 JP 2005301342; 15.12.2005 JP 2005361256
(71) Applicant: Bridgestone Corporation, Tokyo 104-8340 (JP)
(72) Inventor: YAMAMOTO, Megumi, Yokohama-shi, Kanagawa 2440812 (JP); FUJIWARA, Toshihiro, Yokohama-shi, Kanagawa 2440812 (JP); AKIYAMA, Hitoshi, Yokohama-shi, Kanagawa 2440812 (JP)
(74) Representative: Whalley, Kevin
(86) International application number: PCT/JP2006/319939
(87) International publication number: WO 2007/046242

(57) **Abstract**

A marine hose which, when a fluid being transported has leaked from the channel for the fluid, prevents the fluid from leaking out of the hose and in which whether a leak from the channel has occurred or not can be visually recognized externally without fail. The marine hose comprises a hose main body, a cylindrical connecting member inserted in an opening of the hose main body, and a hose armor with which the periphery of the hose main body is covered, wherein the connecting member comprises an insertion part inserted in the opening of the hose main body and a projecting part having a flange, the flange having at least one through-hole, the through-hole having, disposed therein, a rod member having a labeling member wound therearound, the marine hose having a liquid leakage perception chamber disposed behind the through-hole. The marine hose has such a constitution that the fluid which has leaked out of a fluid being transported through the cylindrical channel is introduced into the liquid leakage perception chamber, and a front part of the rod member and the labeling member are pressed out of the through-hole by the pressing force of the fluid introduced, whereby the labeling member is released from the hose.

## Description

### TECHNICAL FIELD

The present invention relates to a marine hose used for transportation of crude oil or the like. More specifically, the invention relates to a marine hose equipped with a leakage detection mechanism such that, upon leakage of the transported fluid from the passage, the fluid can be prevented from leaking to the outside of the hose and that the presence or absence of a leakage of the fluid from the passage can be visually checked from the outside.

### BACKGROUND ART

Conventionally, in transferring crude oil or the like through direct connection between a tanker moored offshore and the land, a multiplicity of hoses capable of securely transferring the fluid to be transported, such as the crude oil, without leakage of the fluid into the sea (so-called "marine hoses") are used in the connected state.
Here, the marine hoses may be bent or curved due to the shocks of winds, rains or waves in bad weather, the shocks arising from disorderly handling at the time of connecting the marine hoses, extreme loads exerted during fluid transfer, or the like. From the viewpoint of prevention of marine pollution with oils, it is very important for the marine hose to be so configured that, even when the inside of the marine hose is damaged due to such bending or curving, the transported fluid would not leak to the outside of the marine hose and the occurrence of the damage can be immediately confirmed from the outside.

The present applicant has previously proposed, in Japanese Patent Laid-open No. Hei 5-99782 and Japanese Patent No. 3430211, a marine hose wherein the pressure of a portion, leaking out of the intrinsic passage in the hose, of the transported fluid is utilized to urge a rod member to move to the outside surface of the hose, whereby the fact of the leakage can be visually confirmed from the outside. Besides, in Japanese Patent Laid-open No. 2001-132876, the present applicant has proposed a marine hose wherein a plastic ball containing a paint agent is disposed inside the hose, and the pressure of a portion, leaking out of the intrinsic passage in the hose, of the transported fluid is utilized to urge a rod member to move forward to pierce the plastic ball, thereby discharging the paint agent to the outside of the hose, whereby the external visual confirmability of the leakage is further enhanced.

However, in the marine hose disclosed in Japanese Patent Laid-open No. Hei 5-99782 and Japanese Patent No. 3430211 mentioned above, there are limits to the size of the rod member expected to move to the outside surface of the hose, on a structural basis; specifically, the size of the rod member must be comparatively small, so that there may be cases where it is difficult to detect externally and swiftly the leakage of the transported fluid. On the other hand, in the marine hose described in Japanese Patent Laid-open No. 2001-132876, the object of visual confirmation has been changed from the rod member itself to the paint agent so as to further enhance the external visual confirmability of the leakage, in consideration of the just-mentioned difficulty. Even with this marine hose, however, there may be the following apprehensions.

(a) On a marine hose structure basis, the size of the plastic ball contained in the hose is limited, so that the amount of the paint agent is also limited. The paint agent discharged from the marine hose into the seawater must be detected before it is completely diffused into the sea; therefore, depending on an ocean current, the period during which the leakage of the transported fluid can be externally detected may be comparatively short.
(b) In the case where the mechanism in which the rod member is urged to externally pierce the plastic ball containing the paint agent is adopted, the stroke of the rod member must be short. Therefore, there is yet room for improvement, from the viewpoint of satisfactory opening of the plastic ball.
(c) There may be cases where a portion of the paint agent contained in the plastic ball remains in the plastic ball and, therefore, cannot fully contribute to the detection of the leakage. In such a case, the tendency as described in (a) above would be more conspicuous.

In the case of dealing with a fluid to be transported which is transferred at high rate and high pressure, such as crude oil, it is particularly important not only to adopt a double or triple leakage preventing means, for securing an assured transfer without leakage, but also to swiftly detect the leakage, if occurred, and to perform appropriate operations such as replacement of the hose, control of the transfer pressure, and so on.
Therefore, there has been a request for development of a marine hose which enables more assured confirmation of a leakage.

### DISCLOSURE OF THE INVENTION

### Problems to be Solved by the Invention

It is an object of the present invention to provide a marine hose which makes it possible, upon the occurrence of a leakage of a transported fluid from the passage, to prevent the fluid from leaking to the outside of the hose, and to visually check the presence or absence of a leakage from the passage assuredly and externally.

### Means for Solving the Problems

In order to solve the above problems, a first marine hose provided with a leakage detecting function according to the present invention is characterized in that, in a marine hose comprising a hose body having a tubular passage, a tubular connection member or members inserted in a liquid-tight manner into one end opening portion or both end opening portions of the hose body, and a hose armor covering the outer peripheral surface of the hose body in a liquid-tight manner,
The connection member is provided at its rear portion with an insertion portion inserted into the opening portion of the hose body, the connection member is provided at its front portion with a projected portion which is provided to be integral with the insertion portion and which has a rib portion projectingly provided in an annular shape along the circumferential direction on the outer peripheral surface of and adjacently to the insertion portion, the rib is provided with at least one through-hole along the direction of the tubular passage, a rod member is disposed in the through-hole so as to be movable toward the front side, a marker member is wound around the rod member, a liquid leakage sensing chamber which can communicate with the through-hole and which normally is held in a liquid-tight manner by a rear portion of the rod member and the hose armor is provided on the rear side of the through-hole, a leaking fluid which is a portion, leaking through a crack generated in a liquid-tight joint interface between the hose body and the connection member or leaking through a crack generated in a wall surface of the tubular passage of the hose body, or a transported fluid flowing through the tubular passage is introduced into the liquid leakage sensing chamber, the pressure of the leaking fluid urges the rod member to move forward in the through-hole, and a tip portion of the rod member and the marker member are pushed out of the through-hole, whereby the marker member wound around the surface of the rod member is opened to the exterior of the hose.

In addition, a second marine hose provided with a leakage detecting function according to the present invention is characterized in that, in a marine hose comprising a hose body having a tubular passage, a tubular connection member or members inserted in a liquid-tight manner into one end opening portion or both end opening portions of the hose body, and a hose armor covering the outer peripheral surface of the hose body in a liquid-tight manner,
The connection member is provided at its rear portion with an insertion portion inserted into the opening portion of the hose body, the connection member is provided at its front portion with a projected portion which is provided to be integral with the insertion portion and which has a rib portion projectingly provided in an annular shape along the circumferential direction on the outer peripheral surface thereof and adjacently to the insertion portion, the rib is provided with at least one through-hole along the direction of the tubular passage, a push-out pin is disposed in the through-hole so as to be movable toward the front side, a buoyancy body is disposed on the front side of the push-out pin in the through-hole or at the boundary position between the through-hole and the exterior of the hose, the push-out pin and the buoyancy body are connected to each other through a marker member, a liquid leakage sensing chamber which can communicate with the through-hole and which normally is held in a liquid-tight manner by a rear portion of the rod member and the hose armor is provided on the rear side of the through-hole,
A leaking fluid which is a portion, leaking through a crack generated in a liquid-tight joint interface between the hose body and the connection member or leaking through a crack generated in a wall surface of the tubular passage of the hose body, or a transported fluid flowing through the tubular passage is introduced into the liquid leakage sensing chamber, and the pressure of the leaking fluid urges the push-out pin to move forward in the through-hole, thereby pushing out the buoyancy body and the marker member to the exterior of the hose, whereby the marker member is opened to the exterior of the hose while being accompanied by the buoyancy body.

In the marine hoses according to the present invention, as mentioned above, even when the transported fluid leaks from the passage thereof, the fluid is prevented from leaking to the outside of the marine hoses, since the inside of the hose where the fluid leaks is covered by the hose armor in a liquid-tight manner.

In addition, in the first marine hose according to the present invention, the mechanism for urging the tip portion of the rod body to the outside of the hose so as to be visually confirmable externally, by the pressure of the leaking fluid, is provided as a leakage detecting mechanism. In this case, the marker member is wound around the surface of the rod member, so that the marker member is opened to the exterior (into the seawater, to the surface of seawater, or into the air), and the marker member can reach a position remote from the marine hose.
On the other hand, in the second marine hose, the mechanism wherein the pressure of the leaking fluid is utilized for urging the push-out pin to move forward, thereby pushing the buoyancy body to move, the buoyancy body is discharged to the outside of the hose and, attendantly, the marker member connected to the buoyancy body is opened to the exterior of the hose, is provided as a leakage detecting mechanism. In this case, also, the marker member connecting the push-out pin and the buoyancy body is opened to the exterior (into the seawater, to the surface of seawater, or into the air) and spread, and the marker member can reach a position remote from the marine hose.
Therefore, both the first and second marine hoses have been improved largely in the external visual confirmability of the leakage.
Moreover, since the marker member is not diffused into the seawater like a paint agent but is maintained in a solid state, it is possible to obviate the problem that the external detection of the leakage of the transported fluid might become impossible as time passes.

The marker member is desirably so configured that the durability of the marker member is maintained and the area where the object of visual confirmation (marker member) can be seen is as wide as possible. For example, a tape-shaped member having a thickness of 0.05 to 3.00 mm, preferably 0.10 to 1.50 mm, more preferably 0.15 to 0.30 mm may be adopted, when the marker member can reach a position more remote from the marine hose while maintaining its external visual confirmability, which is preferable from the viewpoint of visual confirmability. If the thickness is too small, the marker member may be broken; on the other hand, if the thickness is too large, the marker member tends to be shorter, whereby visual confirmability may be spoiled.

In addition, a twine-shaped member having an outside diameter of 0.5 to 5.0 mm, preferably 1.0 to 3.0 mm, more preferably 1.0 to 2.0 mm may be adopted as the marker member. In this case, the marker member can reach a more remote position, whereby the external visual confirmability is more enhanced, as compared with the case where the tape-shaped member is adopted. If the outside diameter is too small, the marker member may be broken or may be too thin and be poor in visual confirmability; on the other hand, if the outside diameter is too large, the marker member tends to be shorter, whereby visual confirmability may be spoiled.

Here, it is preferable from the viewpoint of enhancement of visual confirmability that the marker member is a fluorescent member or a light-reflective member. Further, it is preferable from the viewpoint of durability that the marker member is a seawater-resistant member.
Incidentally, the term "seawater-resistant" in the present invention means the property of maintaining a sufficient strength even when exposed to seawater.

### Effects of The Invention

As has been described above, according to the present invention, there is provided a marine hose such that upon leakage of a transported fluid, the fluid can be prevented from leaking to the exterior of the hose and that the presence or absence of a leakage can be visually confirmed externally and assuredly.

### BRIEF DESCRIPTION OF DRAWINGS

Fig. 1 shows a schematic perspective view and a sectional view of a marine hose, showing an example of the present invention.
Fig. 2 shows side views for illustrating a rod member around which a tape-shaped marker member is wound.
Fig. 3 shows the manner in which an alarm of leakage is issued from a marine hose.
Fig. 4 shows a method in which a tape-shaped marker member is wound around a small diameter portion of a rod member while reversing the winding sense at appropriate positions to provide a plurality of turn-back positions.
Fig. 5 is a perspective view illustrating a push-out pin composite member, which is used for a marine hose according to another example of the present invention.
Fig. 6 is a perspective view illustrating a modified example of the push-out pin composite member.
Fig. 7 is a perspective view illustrating another modified example of the push-out pin composite member.
Fig. 8 is a sectional view of a marine hose, showing a further example of the present invention.

### BEST MODE FOR CARRYING OUT THE INVENTION AND EXAMPLES

Now, embodiments of the present invention will be described in detail below referring to the drawings; it is to be noted, however, that the invention is not limited to the following embodiments.

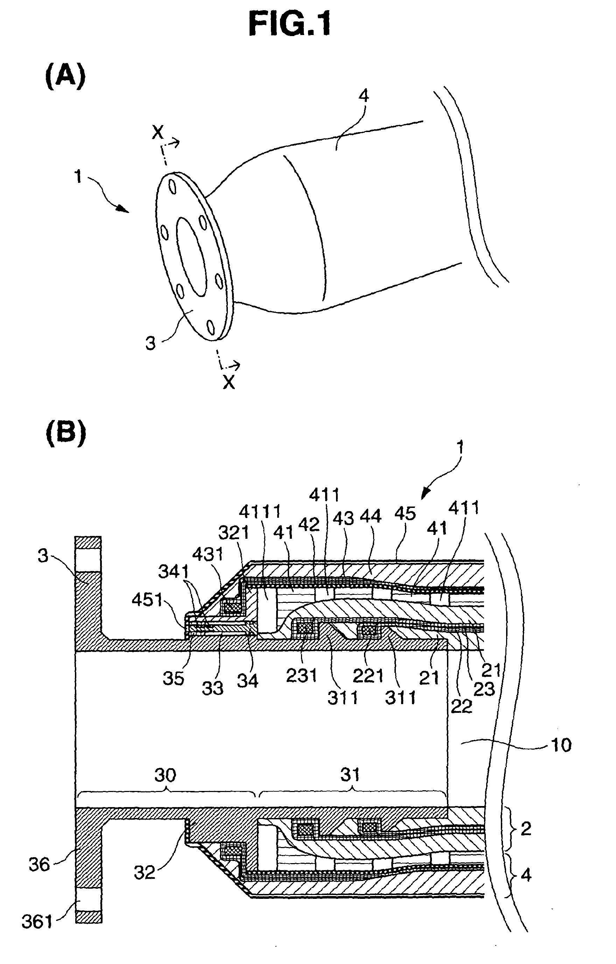

Fig. 1(A) is a schematic perspective view of a marine hose 1 showing an example of the present invention, and Fig. 1(B) is a sectional view taken along line X-X of Fig. 1(A). As shown in Figs. 1(A) and 1(B), the marine hose 1 comprises a hose body 2 having a tubular passage 10, a tubular connection member 3 inserted in a liquid-tight manner into one end opening portion of the hose body 2, and a hose armor 4 covering the whole outer peripheral surface of the hose body 2 and the surface of a portion of the connection member 3 in a liquid-tight manner.

In Fig. 1(B), the hose body 2 has a configuration in which pressure-resistant reinforcement layers 22 and 23 are embedded in a pressure-sensitive rubber pipe 21. Bead wires 221, 223 are fixed to tip end portions of the pressure-resistant reinforcement layers 22, 23 in the state of being wound in end portions of the pressure-resistant reinforcement layers 22, 23, for firmly maintaining the connection with the connection member 3.

In addition, in Fig. 1(B), the connection member 3 inserted in the one end opening portion of the hose body 2 in a liquid-tight manner is provided at its rear portion with an insertion portion 31 inserted into the opening portion of the hose body 2, and is provided at its front portion with a projected portion 30 formed to be integral with the insertion portion 31. The projected portion 30 is provided at its rear portion with a rib portion 32 having an annular rib along the circumferential direction on the outer peripheral surface thereof and adjacently to the insertion portion 31. On the rib portion 32, further, a flange-like projection 321 is projectingly provided on the outer peripheral surface of the rib portion 32 as a part of the rib portion 32. The rib portion 32 is provided therein with one through-hole 33 along the direction of the tubular passage. A rod member 34 is disposed in the through-hole 33 so as to be movable forwards, and a marker member 341 is wound around the surface of a front portion of the rod member 34. On the tip side in the moving-forward direction of the rod member 34 disposed inside the through-hole 33, an annular member 35 for stabilizing the moving-forward operation of the rod member 34 is disposed.

Incidentally, two serration-like ribs 311 projecting annularly along the circumferential direction is provided on the outer peripheral surface of the insertion portion 31 to be locked respectively with portions of the bead wires 221, 231, whereby the connection with the hose body 2 is firmly maintained. Further, the projected portion 30 of the connection member 3 is provided at its tip end portion with a connection flange 36, which is provided with bolt passing holes 361 at predetermined positions.

Furthermore, in Fig. 1(B), the hose armor 4 is so disposed as to cover in a liquid-tight manner the whole outer peripheral surface of the hose body 2 and the whole outside surface of the rib portion 32 inclusive of the flange-like projection 321. In Fig. 1(B), the hose armor 4 is composed of a band-like member 41 wound spirally around the hose body 2, a lining rubber layer 42 covering the spirally wound band-like member 41 and the outer peripheral surface of a top portion of the flange-like projection 321, a pressure-resistant reinforcement layer 43 further covering the lining rubber layer 42 and locked to the flange-like projection 321, a buoyancy member 44 covering the pressure-resistant reinforcement layer 43, and a outer skin rubber layer 45 covering the outside surface of the buoyancy member 44 and the outside surface of the rib portion 32.
Like the pressure-resistant reinforcement layers 22, 23, the pressure-resistant reinforcement layer 43 has a bead wire 431 wound in an end portion thereof.

Here, the material of the band-like member 41 is preferably a foamed elastic material, from the viewpoint of easing the shock at the time of leakage of a high-pressure leaking fluid in order to prevent enlargement of the breakage of the marine hose 1 and from the viewpoint of imparting buoyancy to the marine hose 1. Examples of the foamed elastic material includes foamed bodies of natural rubber, nitrile-butadiene rubber, styrene-butadiene rubber, polyethylene, vinyl chloride resin, and the like.

Incidentally, since the band-like member 41 is wound spirally, a leaking fluid guide-out passage 411 as a communicating space along the band-like member 41 is formed between the adjacent loop portions of the band-like member 41. The leaking fluid guide-out passage 411 can communicate with the through-hole 33, but its communication is normally shut off by the rear end face of the rod member 34, and it is kept liquid-tight by the band-like member 41 as above-mentioned. Here, a certain space where the rear end face of the rod member 34 is exposed (which space constitute a part of the leaking fluid guide-out passage 411) is referred to as a liquid leakage sensing chamber 4111 in the present invention.

Besides, the pressure-resistant reinforcement layer 43 can be formed as a layer in which a polyester cord, a nylon cord or the like is wound in an overlapping manner. The intersection angle of the cord is desirably a static angle, from the viewpoint of preventing the deformation of the leaking fluid guide-out passage 411.

With the marine hose 1 configured as above, a transported fluid flowing in the tubular passage is guided into the liquid leakage sensing chamber 4111 in the following manner. In the case where a crack is generated in the liquid-tight joint interface between the hose body 2 and the connection member 3, the leaking fluid leaking through the crack is guided along the outer peripheral surface of the connection member 3 directly into the liquid leakage sensing chamber 4111. On the other hand, in the case where a crack is generated in the wall surface of the tubular passage of the hose body 2, the lining rubber layer 42 and the pressure-resistant reinforcement layer 43, in this order from the tubular passage of the hose body 2 toward the outside surface of the marine hose 1, function as leakage-preventive walls, whereby the leaking fluid leaking through the crack is guide through the leaking fluid guide-out passage 411 into the liquid leakage sensing chamber 4111.

Incidentally, in the present invention, the leaking fluid is guided into the liquid leakage sensing chamber 4111, the leaking fluid exerts a pressure on the rod member 34 in the through-hole 33 communicating with the liquid leakage sensing chamber 4111 in a liquid-tight manner, thereby urging the rod member 34 to move forward, a tip portion of the rod member 34 is pushed out from the inside of the through-hole 33 to the outside of the through-hole 33 through a window portion 451 preliminarily provided in the outer skin rubber layer 45, whereby the marker member 341 wound around the surface of the rod member 34 is opened to the exterior of the marine hose.
Incidentally, when the tip end of the rod member 34 is sharpened, the tip end of the rod member 34 pierces the outer skin rubber layer 45, so that the marker member 341 can be moved forward to the outside of the through-hole 33, even if the window portion 451 has not been provided; therefore, penetration of seawater or the like into the marine hose 1 can be prevented more securely.

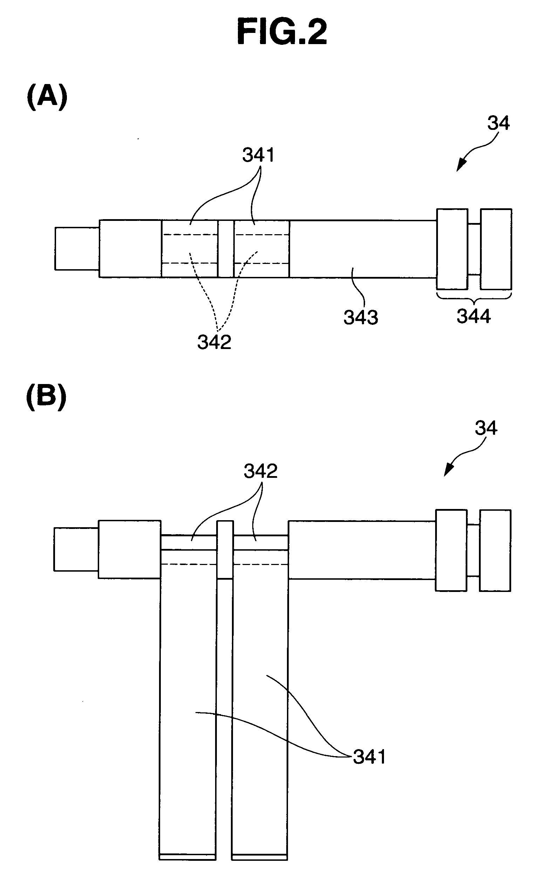

Fig. 2(A) is a side view of a roughly circular columnar rod member 34 around which a tape-shaped fluorescent or light-reflective marker member 341 is wound, and Fig. 2(B) is a side view of the rod member 34 in the condition where the marker member 341 is unwound. In Figs. 2(A) and 2(B), the rod member 34 comprises: a rod body 343 having two small diameter portions 342, 342 in the area ranging from the vicinity of the center in the axial direction of the rod member 34 to the tip end side of the rod member 34, with one-side ends of two tape-shaped marker members 341, 341 fixed to the small diameter portions 342, 342; and a large diameter head portion 344 at a rear end portion of the rod member 34.
Here, when the outside diameter of the large diameter head portion 344 is set to be greater than the inside diameter of the annular member 35, the rod member 34 as a whole is prevented from slipping out of the through-hole 33. In addition, when the diameter of the large diameter head portion 344 is set according to the inside diameter of the through-hole 33, the pressure of the leaking fluid to be exerted on the rear end face of the rod member 34 can be expected to be effectively transmitted to the rod member. Incidentally, a sealing with an O-ring is preferably made so that no gap is generated between the outer peripheral surface of the large diameter head portion 344 and the inner peripheral surface of the through-hole 33.

As a method for forming the fluorescent member, any of known methods can be appropriately adopted, for example, a method in which a base resin with a commercially available fluorescent coating material kneaded therein is molded, or a method in which a base resin is coated with a commercially available fluorescent coating material. Besides, as a method for forming the light-reflective member, an arbitrary method can be adopted, for example, a method in which a base resin is coated with a commercially available reflective material.
Incidentally, the tape-shaped marker member 341 is a seawater-resistant member, which can be obtained, for example, by a method in which a material is selected from resins capable of maintaining a sufficient strength even when exposed to seawater.

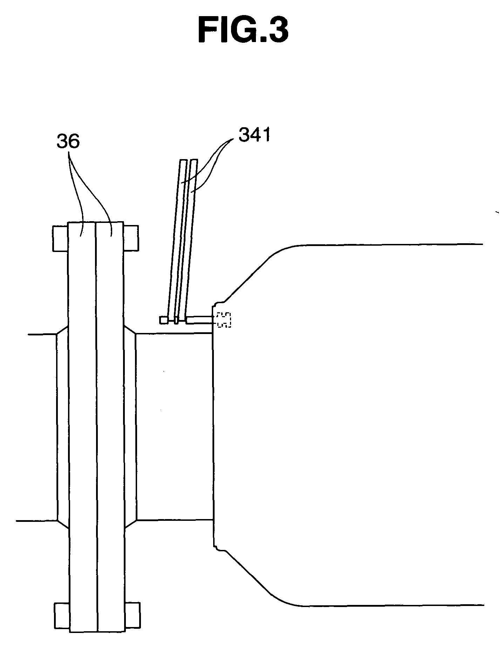

The marker member 341 is wound in the condition where its one end is fixed. Therefore, when the rod member 34 is urged by he pressure of a leaking fluid to move forward from the inside of the through-hole 33 to the outside of the through-hole 33, the marker member 341 is unwound by an ocean current or the like, and the marker member 341 can reach a position more remote from the axis of the marine hose 1. Fig. 3 shows the manner in which an alarm of leakage is issued.

Here, the unwinding of the marker member 341 may be gradually effected by an ocean current or the like. From the viewpoint of achieving a more quick unwinding, however, the small diameter portions 342 themselves are preferably so formed that they can rotate about the axis of the rod member. Besides, it is also effective that the marker member 341 is formed with an appropriate elasticity so that, after the rod member moves forward to the outside of the through-hole 33, the marker member 341 spontaneously spread under its own elasticity. Examples of members having such elasticity include stainless steel springs (those used for measure scales for length measurement, and the like), shape memory alloys, and the like. The stainless steel spring or shape memory alloy may be used in the state of being joined to a resin tape.

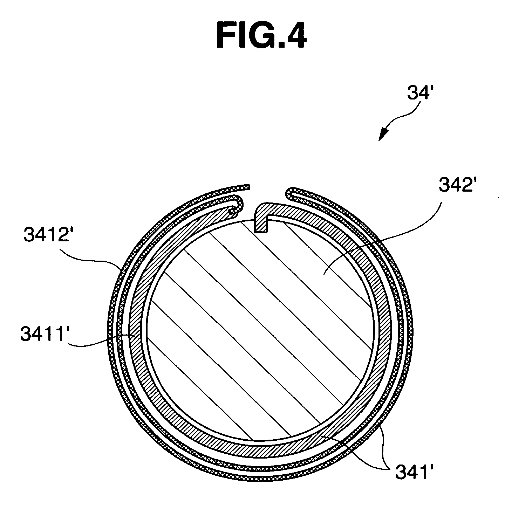

In addition, as the method for winding the marker member 341 around the rod member 34, a winding method in which the winding sense is reversed at appropriate positions to provide a plurality of turn-back positions, taking into account a more quick spreading of the marker member 341. Fig. 4 illustrates a method in which a tape-shaped marker member 341' is wound around a small diameter portion 342' of a rod member 34' while reversing the winding sense at appropriate positions (in the figure, in the vicinity of a top portion of the section circle of the small diameter portion 342') to provide a plurality of turn-back positions. Incidentally, the marker member 341' is a combination of a tape-shaped marker member 3411' composed of a stainless steel spring and a polyester resin-made tape-shaped marker member 3412' which are joined to each other.

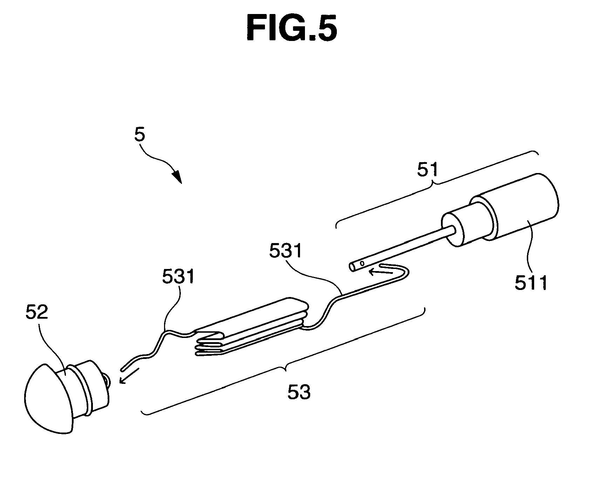

Fig. 5 is a perspective view illustrating a push-out pin composite member 5 adopted in a marine hose according to another example of the present invention. The push-out pin composite member 5 is a member which can replace the rod member 34 in the marine hose 1 described above. The push-out pin composite member 5 comprises: a push-out pin 51 disposed in the through-hole 33 in the marine hose 1; a buoyancy body 52 used as a cap for closing the hose exterior side opening of the through-hole 33; and a marker member 53 interposed between the push-out pin 51 and the buoyancy body 52 to connect them. The push-out pin 51 is provided at its rear end with a spindle body 511 as a large diameter head portion, and communication between the through-hole 33 and the liquid leakage sensing chamber is normally interrupted by the rear end face of the spindle body 511 (the rear end face of the push-out pin 51). In addition, the marker member 53 is provided with a connecting string 531 capable of being used for connecting the push-out pin 51 and the buoyancy body 52. Incidentally, in Fig. 5, the connection between the marker member 53 and the push-out pin 51 is realized by a method in which the connecting string 531 provided as a part of the marker member 53 is passed through and fixed to a connection hole provided at the tip end of the push-out pin 51, whereas the connection between the marker member 53 and the buoyancy body 52 is realized by a method in which the connecting string 531 is passed through and fixed to a connecting annular projection provided at the rear end of the buoyancy body 52 (incidentally, the arrows in the figure each exemplifies the passing direction).

Here, like the large diameter head portion 344 of the rod member used in the marine hose 1 described above, the spindle body 511 can be regulated in outside diameter; in addition, arrangement of a seal member such as an O-ring is also possible.
In addition, as for the marker member 53, like the marker member 341 used in the marine hose 1 described above can be used.

In the marine hose configured by adopting the push-out pin composite member 5, after the leaking fluid is guided into the liquid leakage sensing chamber 4111, the pressure of the leaking fluid is exerted on the push-out pin 51 disposed in the through-hole 33 communicating with the liquid leakage sensing chamber 4111 in a liquid-tight manner, whereby the push-out pin 51 is moved forward to push the buoyancy body 52 and discharge it to the exterior of the hose, the marker member 53 is discharged to the exterior of the hose in the manner of being pulled out by the buoyancy body 52, and the marker member 53 spreads or extends. Particularly, where the buoyancy body 52 is discharged into seawater, the buoyancy body 52 floats up to the surface of the sea, so that the marker member 53 is spread favorably.

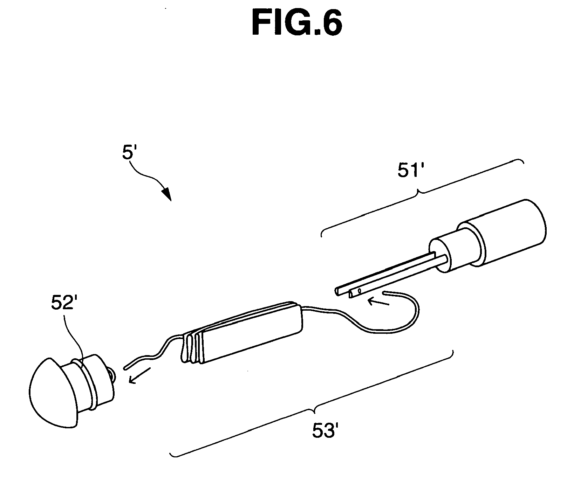

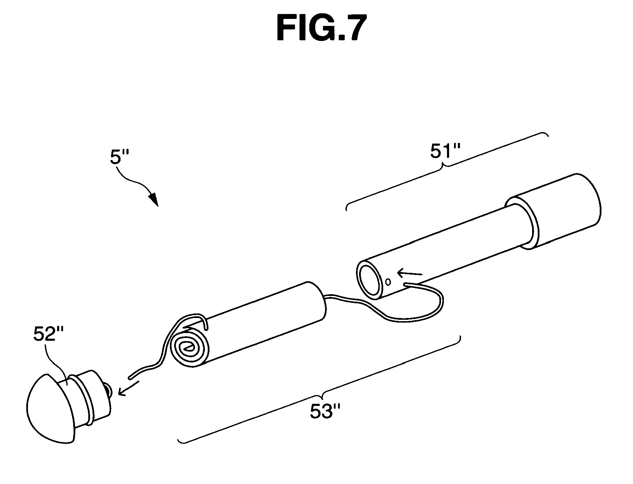

Figs. 6 and 7 are each a perspective view of a push-out pin composite member 5' or a push-out pin composite member 5", illustrating a modified example or another modified example of the push-out composite member 5. In Fig. 6, the push-out pin composite member 5' is characterized in that it has a plurality of pins for pushing out a buoyancy body 52'. In Fig. 7, the push-out composite member 5" is characterized in that a tubular shape is adopted as the shape of the pin for pushing out a buoyancy body 52". In each of the cases of using the push-out pin composite member 5' or the push-out pin composite member 5", the marker member can favorably be stored more easily because it can be clamped between the plurality of push-out pins or be contained in the tubular push-out pin, as compared with the case of using the push-out composite member 5 described above.

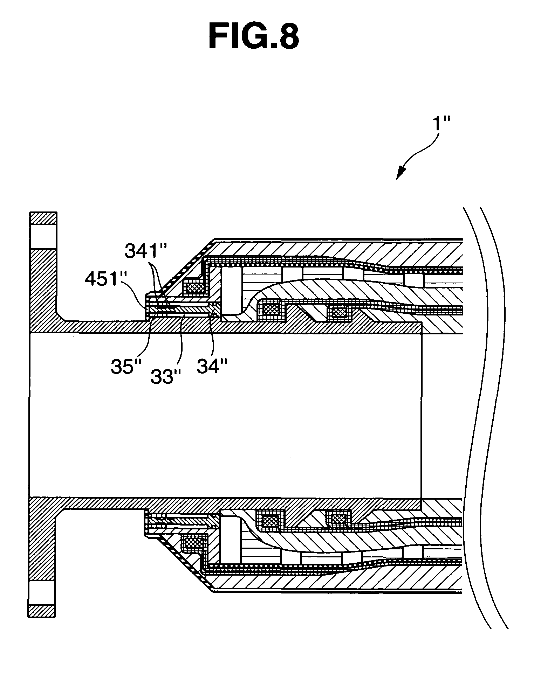

Incidentally, the marine hose according to the present invention may be subjected to appropriate design modifications within such ranges as not to spoil the object of the invention, based on the above-described embodiments. The materials of component parts can be selected as required, and the adhesion (curing adhesion, adhesion by use of an adhesive, and the like) between the component members can be performed appropriately. Two or more through-holes may be provided (see Fig. 8). An appropriate fastening cord or the like may be used, for firm fixation of the layers. Embedding of a further reinforcement means (reinforcement wire, and the like) in each layer, insertion of an O-ring, and the like can be performed, as required. The method for connecting the marker member with the push-out pin or the buoyancy body in the push-out pin composite member is not particularly limited; an adhesive may be used, as required, and the disposing position and the passing position of the connecting string may also be changed, as required. A method in which the connecting string is not used, or the like method, may also be adopted.

## Claims

1. A marine hose comprising a hose body having a tubular passage, a tubular connection member or members inserted in a liquid-tight manner into one end opening portion or both end opening portions of said hose body, and a hose armor covering the outer peripheral surface of said hose body in a liquid-tight manner,
wherein said connection member is provided at its rear portion with an insertion portion inserted into said opening portion of said hose body, said connection member is provided at its front portion with a projected portion which is provided to be integral with said insertion portion and which has a rib portion projectingly provided in an annular shape along the circumferential direction on the outer peripheral surface thereof and adjacently to said insertion portion, said rib is provided with at least one through-hole along the direction of said tubular passage, a rod member is disposed in said through-hole so as to be movable toward the front side, a marker member is wound around said rod member, a liquid leakage sensing chamber which can communicate with said through-hole and which normally is held in a liquid-tight manner by a rear portion of said rod member and said hose armor is provided on the rear side of said through-hole, a leaking fluid which is a portion, leaking through a crack generated in a liquid-tight joint interface between said hose body and said connection member or leaking through a crack generated in a wall surface of said tubular passage of said hose body, or a transported fluid flowing through said tubular passage is introduced into said liquid leakage sensing chamber, the pressure of said leaking fluid urges said rod member to move forward in said through-hole, and a tip portion of said rod member and said marker member are pushed out of said through-hole, whereby said marker member wound around the surface of said rod member is opened to the exterior of said hose.

2. A marine hose comprising a hose body having a tubular passage, a tubular connection member or members inserted in a liquid-tight manner into one end opening portion or both end opening portions of said hose body, and a hose armor covering the outer peripheral surface of said hose body in a liquid-tight manner,
wherein said connection member is provided at its rear portion with an insertion portion inserted into said opening portion of said hose body, said connection member is provided at its front portion with a projected portion which is provided to be integral with said insertion portion and which has a rib portion projectingly provided in an annular shape along the circumferential direction on the outer peripheral surface thereof and adjacently to said insertion portion, said rib is provided with at least one through-hole along the direction of said tubular passage, a push-out pin is disposed in said through-hole so as to be movable toward the front side, a buoyancy body is disposed on the front side of said push-out pin in said through-hole or at the boundary position between said through-hole and the exterior of said hose, said push-out pin and said buoyancy body are connected to each other through a marker member, a liquid leakage sensing chamber which can communicate with said through-hole and which normally is held in a liquid-tight manner by a rear portion of said rod member and said hose armor is provided on the rear side of said through-hole,
a leaking fluid which is a portion, leaking through a crack generated in a liquid-tight joint interface between said hose body and said connection member or leaking through a crack generated in a wall surface of said tubular passage of said hose body, or a transported fluid flowing through said tubular passage is introduced into said liquid leakage sensing chamber, and the pressure of said leaking fluid urges said push-out pin to move forward in said through-hole, thereby pushing out said buoyancy body and said marker member to the exterior of said hose, whereby said marker member is opened to the exterior of said hose while being accompanied by said buoyancy body.

3. The marine hose as set forth in claim 1 or 2, wherein said marker member is a tape-shaped member having a thickness of 0.05 to 3.00 mm.

4. The marine hose as set forth in claim 1 or 2, wherein said marker member is a twine-shaped member.

5. The marine hose as set forth in claim 3 or 4, wherein said marker member is a fluorescent member.

6. The marine hose as set forth in claim 3 or 4, wherein said marker member is a light-reflective member.

7. The marine hose as set forth in any one of claims 3 to 6, wherein said marker member is a seawater-resistant member.
